Europäisches Patentamt

European Patent Office

Office européen des brevets

(11) Numéro de publication: **0 391 755**
**A2**

(12) **DEMANDE DE BREVET EUROPEEN**

(21) Numéro de dépôt: **90400570.9**

(22) Date de dépôt: **01.03.90**

(51) Int. Cl.5: **H04N 3/14**

(30) Priorité: **03.03.89 FR 8902799**

(43) Date de publication de la demande:
**10.10.90 Bulletin 90/41**

(84) Etats contractants désignés:
**AT BE CH DE DK ES GB GR IT LI LU NL SE**

(71) Demandeur: **Société dite: CENTAURE SA**
**Z.I. Les Pointards**
**F-18410 Brinon sur Sauldre(FR)**

(72) Inventeur: **Lefebvre-Despeaux, Jean-Marc**
**La Robinière**
**F-45420 Sennely(FR)**

(54) **Système de visualisation d'images.**

(57) Système de reproduction d'images par un panneau de diodes électroluminescentes.

Selon l'invention, chaque image ou partie d'image mémorisée et stockée dans une mémoire (M3) est exploitée pour élaborer des sous-images grâce à des informations préenregistrées dans une table de conversion (T) formant mémoire morte et les informations représentatives desdites sous-images apparaissent successivement à la sortie (S) de la table de conversion qui est reliée à une cascade de registres à décalage (13) pilotant les diodes électroluminescentes (11), les sous-images se superposant grâce à la persistance rétinienne pendant la durée de visualisation souhaitée de l'image.

FIG. 1

## SYSTEME DE VISUALISATION D'IMAGES

L'invention se rapporte à un système de visualisation d'images, notamment d'images vidéo sur une grande surface où les emplacements des pixels sont matérialisés par des composants lumineux, tels que des diodes électroluminescentes, agencés suivant une configuration matricielle, sur ladite surface.

On connaît des systèmes d'affichage d'informations par diodes électroluminescentes, ayant généralement une surface d'affichage en forme de rectangle allongé, pour permettre la visualisation d'informations défilantes. Chaque pixel de l'image est matérialisé par une diode électroluminescente qui est allumée ou éteinte. Ces systèmes sont particulièrement utiles dans les lieux publics, car les diodes électroluminescentes sont visibles de loin. En revanche, leur luminosité n'est pas modulable, ce qui a limité jusqu'à présent leur utilisation à la représentation de messages écrits, éventuellement de quelques dessins.

Par ailleurs, on connaît des systèmes vidéo "grand écran", constitués par la juxtaposition côte à côte d'un certain nombre de téléviseurs. Des moyens électroniques sont prévus pour diviser l'image en un nombre correspondant d'images partielles. Chaque image partielle est reproduite par l'un des téléviseurs, de façon à reconstituer la totalité de l'image sur l'ensemble de la surface occupée par lesdits téléviseurs. Cependant, les interstices entre les écrans de télévision ne peuvent être réduits et l'image ainsi agrandie, apparaît quelque peu morcelée.

L'invention a pour but de mettre en oeuvre la technologie des panneaux d'affichage composés d'éléments lumineux tels que des diodes électroluminescentes, pour la représentation d'images mobiles. Une séquence vidéo quelconque se décompose, comme chacun sait, en une séquence d'images fixes se succédant à un rythme donné, par exemple 25 images par seconde. Le principe de base de l'invention consiste à représenter chaque image fixe de cette succession d'images (dans le temps qui lui est imparti) par une succession de "sous-images" pour lesquelles les diodes sont allumées ou éteintes, la persistance rétinienne "intégrant" la superposition de toutes ces sous-images pour reconstituer l'image fixe. Dans ce processus, la luminosité d'un point de l'image est donc traduite par le nombre d'allumages de la diode électroluminescente correspondante, dans la succession desdites sous-images. Un nombre d'allumages dans une séquence de sous-images d'une même image fixe est traduit par des allumages effectifs de chaque diode dans un nombre prédéterminé de sous-images de ladite séquence.

Dans cet esprit, l'invention concerne donc un système de visualisation d'images comprenant au moins un panneau de composants lumineux tels que des diodes électroluminescentes, agencé suivant une configuration matricielle sur une surface de visualisation, lesdites diodes étant pilotées par des sorties respectives de registres à décalage connectés en cascade, caractérisé en ce qu'il comprend :

- une mémoire recevant des informations numérisées représentatives d'au moins une fraction d'image vidéo et correspondant à un nombre prédéterminé de composants lumineux, le contenu de ladite mémoire étant renouvelé à un rythme de succession desdites images,

- une table de conversion, formant mémoire morte, connectée d'une part à ladite mémoire et d'autre part à un séquenceur pour recevoir respectivement cycliquement des informations de ladite mémoire et des ordres de séquencement, la sortie de cette table de conversion étant connectée à ladite cascade de registres à décalage, et

- en ce que ladite table de conversion est programmée pour générer à sa sortie des informations représentatives de sous-images au rythme dudit séquenceur, chaque composant lumineux étant allumé au cours d'un cycle de sous-images un nombre de fois et à des instants prédéterminés au moins en partie par la valeur d'une information correspondante dans ladite mémoire.

Les informations prélevées dans ladite mémoire pour adresser ladite table de conversion sont avantageusement complétées par des informations représentatives de la luminosité ambiante, grâce à des moyens sensibles à la luminosité ambiante, comprenant par exemple un transducteur photosensible et un convertisseur analogique-numérique. De cette façon, les configurations d'allumage dans lesdites sous-images sont modifiées en fonction de la luminosité ambiante, la luminosité globale de l'image variant dans le même sens que ladite luminosité ambiante.

L'invention sera mieux comprise et d'autres avantages de celle-ci apparaîtront plus clairement à la lumière de la description qui va suivre d'un exemple de réalisation, faite en référence aux dessins annexés, dans lesquels :

- la figure 1 est un schéma-bloc du système de visualisation d'images vidéo conforme à l'invention;

- la figure 2 est un tableau de chiffres illustrant le nombre d'allumages en fonction, d'une part, des caractéristiques de luminosité d'un point de cette image et, d'autre part, de la luminosité ambiante; et

- la figure 3 constitue un tableau illustrant la répartition des allumages dans une séquence de sous-images correspondant à la représentation d'une image fixe.

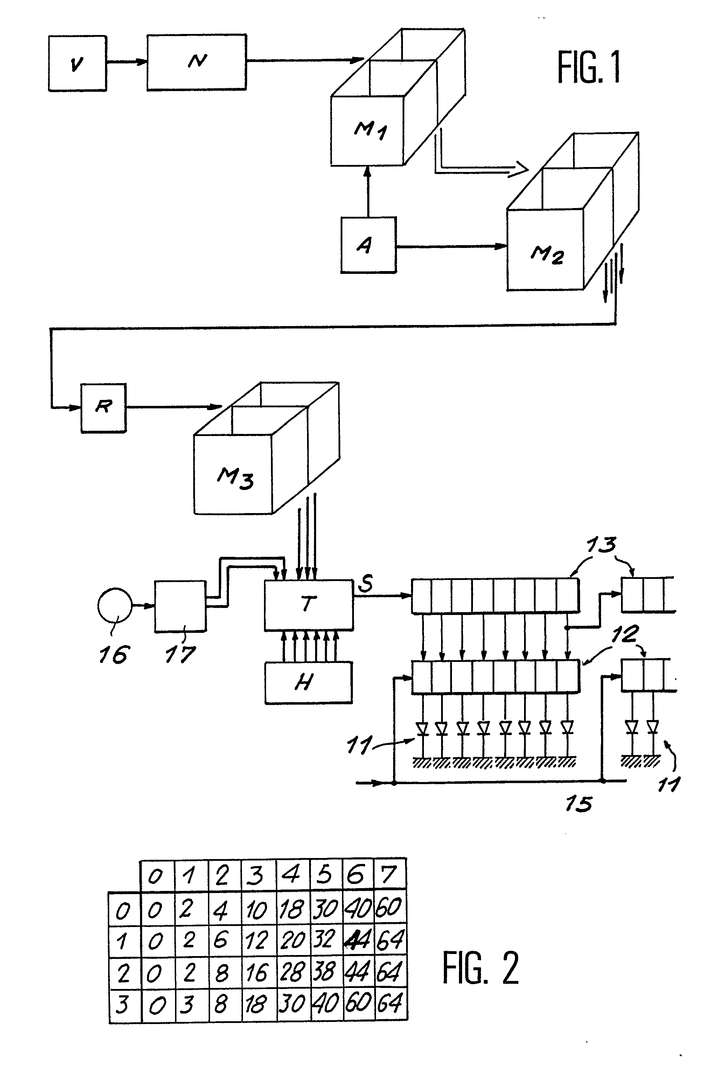

Dans l'exemple décrit, l'installation comporte notamment une source de signal vidéo V, par exemple une caméra ou un magnétoscope, une unité de numérisation N recevant ledit signal vidéo de la source de signal vidéo et délivrant un signal correspondant où chaque pixel de l'image vidéo est codé sous forme numérique, des mémoires M1, M2, M3 et un tableau de visualisation constitué par une pluralité de diodes électroluminescentes 11 disposées côte à côte suivant une configuration matricielle. Les informations numériques délivrées par l'unité de numérisation N sont adressées à une première mémoire M1 dans laquelle sont stockées, cycliquement, des informations représentatives d'une succession d'images. S'agissant d'une représentation animée, les informations dans la mémoire M1 sont renouvelées à un rythme "cinématographique" ici choisi égal à 25 images par seconde. L'échantillonnage du signal vidéo par l'unité de numérisation N est ici effectué sur 3 bits. Autrement dit, la luminance de chaque pixel peut prendre huit valeurs différentes, de 0 à 7. C'est pourquoi la mémoire M1 a été schématisée avec trois "plans", chaque plan renfermant les unités de mémorisation nécessaires aux bits de même poids de tous les pixels de l'image vidéo. Les informations sont lues et transférées, au moins partiellement, dans une mémoire M2, sous la commande d'un automate logique A. Le renouvellement des informations dans la mémoire M2 est fait au même rythme que dans la mémoire M1. La mémoire M2 est une mémoire de "formatage" et de traitement qui permet de réaliser une image composée à partir de l'image vidéo disponible dans la mémoire M1. Ainsi, la mémoire M2 qui est également schématisée sous forme d'une mémoire "trois plans" renferme un nombre d'unités de mémorisation susceptible de représenter les valeurs de luminance de tous les composants lumineux du panneau de visualisation. Ces composants sont les diodes électroluminescentes 11 commandées par des bascules 12 (chaque bascule formant une mémoire tampon) elles-mêmes pilotées par des sorties respectives de registres à décalage 13 montés en cascade. L'agencement des registres à décalage pilotant les diodes électroluminescentes est connu en soi. Les diodes électroluminescentes sont réparties en modules disposés côte à côte d'une façon analogue aux téléviseurs définis ci-dessus. Chaque module constitue un panneau de 4800 diodes électroluminescentes (60 x 80). Les modules sont disposés côte à côte, mais bien entendu, ne laissent subsister aucun interstice entre eux. Le système décrit est conçu pour comporter un maximum de 16 modules. La mémoire M2 est dimensionnée en conséquence, pour la commande de ces 16 modules. Elle permet entre autres, sous le contrôle de l'automate A, de recopier l'image complète contenue dans la mémoire M1 sur l'ensemble des diodes de tous les modules (pour obtenir une image de surface maximum), soit d'afficher la même image quatre fois (une image étant reproduite par quatre modules disposés côte à côte), soit encore d'afficher la même image seize fois (chaque module reproduisant l'image). Le transfert des informations de M1 vers M2 est fait en conséquence, sous la commande de l'automate A. On peut aussi introduire d'autres informations au niveau de la mémoire M2, par exemple des informations représentatives d'autres images ou bien des inscriptions, venant se substituer à certaines parties de l'image de base. La mémoire M2 est donc virtuellement partagée en 16 blocs correspondant aux modules et les informations disponibles dans chacun de ces blocs sont délivrées séparément par des liaisons spécifiques et au même rythme de 25 fois par seconde, à des mémoires M3 correspondant respectivement aux différents modules. Les mémoires M3 sont donc également des mémoires "trois plans" où les informations correspondant au nombre de diodes électroluminescentes d'un module sont inscrites et renouvelées au même rythme de succession des images vidéo, c'est-à-dire 25 fois par seconde. Les inscriptions dans chaque mémoire M3 sont effectuées sous le contrôle d'un automate de rangement R, spécifique. Les automates R et leurs mémoires M3 respective sont décentralisés dans les modules correspondants. Sur la figure 1, on n'a représenté qu'une seule chaîne de traitement correspondant à un module, à partir de l'automate de rangement R. Chaque mémoire M3 est interconnectée à une table de conversion T, de structure connue en soi, constituée d'une mémoire morte et de ses moyens d'adressage. On entend par mémoire morte, toute mémoire dans laquelle des informations sont pré-enregistrées et qui ne peuvent qu'être lues. Les informations d'entrée provenant notamment de la mémoire M3 sont utilisées en tant qu'adresse de la mémoire morte où se trouvent pré-enregistrées des informations représentatives des ordres d'allumage des diodes électroluminescentes 11, à un rythme déterminé par un séquenceur H délivrant à la table de conversion T les ordres de séquencement à raison ici de 64 phases d'allumage successives par période correspondant à la durée d'une image fixe, c'est-à-dire par 25ième de seconde. Ces ordres de séquencement sont donc ici codés sur six bits et permettent de consulter la table de conversion pour élaborer des informations représentatives de 64 sous-images qui apparaissent successivement à la sortie S de ladite table de conversion. Ces 64 sous-images se succèdent donc à la sortie S, en un 25ième de seconde. Pour l'élaboration de chaque sous-image, les informations de la mémoire M3 sont successivement transférées vers la table de conversion en tant que parties des adresses successives de la table de conversion. En effet, le système comporte aussi des moyens sensibles à la luminosité ambiante, essentiellement constitués ici d'un transducteur photosensible 16 et d'un convertisseur analogique-numérique 17, apte à élaborer des informations numérisées représentatives de la luminosité ambiante. La sortie du convertisseur 17 est reliée à la table de conversion au même titre que celle de la mémoire M3. L'échantillonnage de ladite luminosité est fait sur deux bits. Autrement dit, la luminosité ambiante est transcrite par quatre valeurs possibles, au niveau de la table de conversion T. La figure 2 permet de mieux comprendre comment les adresses d'entrée provenant de la mémoire M3 sont modifiées ou complétées par celles qui proviennent du convertisseur 17. Ce tableau donne le nombre d'allumages choisi dans une séquence de 64 sous-images, compte-tenu de la valeur de luminance d'un pixel donné (codé entre 0 et 7) lue dans la mémoire M3 et de la valeur de la luminosité ambiante (codée entre 0 et 3). Les valeurs de luminance sont portées en abscisse et les valeurs de luminosité ambiante sont portées en ordonnée. Les informations délivrées par le convertisseur 17 permettent en quelque sorte de modifier les configurations d'allumage dans les sous-images pour tenir compte de la luminosité ambiante. On voit que le nombre d'allumages dans une séquence de sous-images varie entre 0 et 64 (c'est-à-dire que chaque diode considérée peut être, selon les cas, complètement éteinte ou allumée en permanence). Le nombre d'allumages est ici limité à 19 valeurs différentes possibles. Ces valeurs ont été choisies parmi une infinité de solutions; leur nombre est suffisant pour traduire toute l'échelle de luminance de l'image vidéo, en tenant compte de la luminosité ambiante. Ces valeurs figurent dans le tableau de la figure 2; d'autres valeurs pourraient être sélectionnées. En fait, la sortie de la mémoire M3 et celle du convertisseur 17 se combinent pour l'élaboration d'une adresse complète de cinq bits, pour l'adressage de la table de conversion. Trois bits sont délivrés par la mémoire M3 et deux bits par le convertisseur 17. Les bits correspondant au convertisseur 17 ne varient pratiquement jamais au cours d'une séquence de sous-images; ils permettent seulement de déterminer la "ligne" du tableau de la figure 2. Quoi qu'il en soit, l'adresse complète ainsi élaborée permet, pour chaque valeur de la mémoire M3, de déterminer le nombre d'allumages de chaque diode dans chaque sous-image. Chacune de ces sous-images est donc élaborée par une lecture complète de la mémoire M3 et la table de conversion permet de déterminer si telle ou telle diode doit être allumée ou éteinte dans la sous-image considérée.

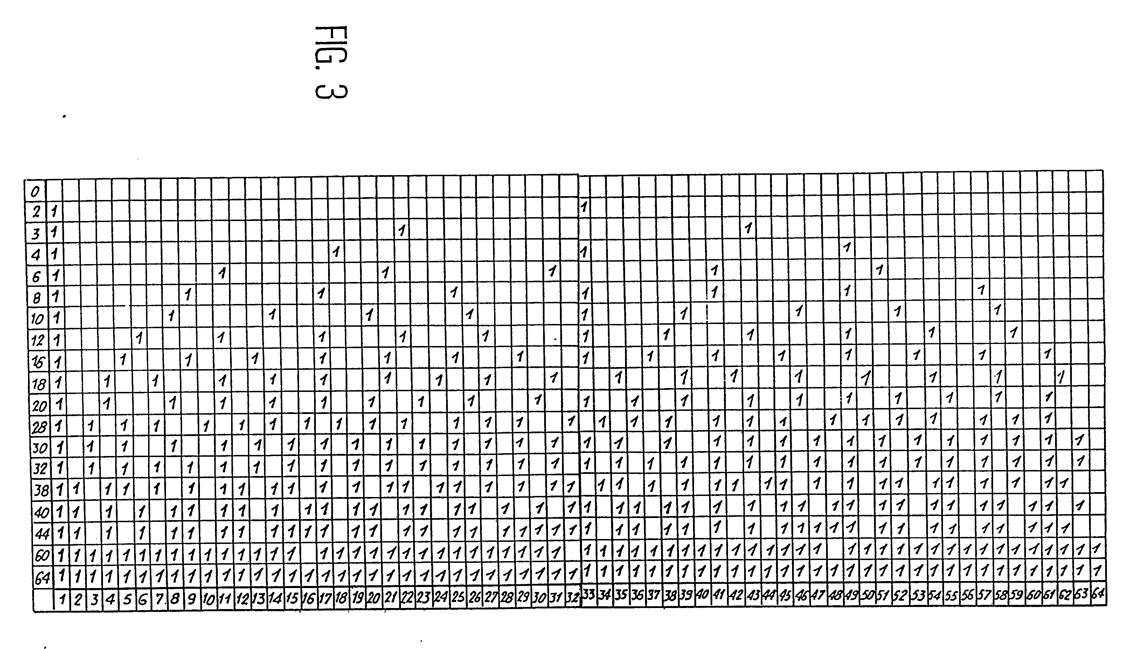

La figure 3 donne la répartition dans le temps d'un cycle complet de sous-images, du nombre d'allumages déterminé par le tableau de la figure 2. Là encore, la répartition des allumages a été choisie parmi beaucoup d'autres possible, et ne saurait être considérée comme une caractéristique limitative de l'invention.

Dans le tableau de la figure 3, on retrouve en ordonnées les différentes valeurs possibles du nombre d'allumages, compte-tenu de la luminosité ambiante. La succession des 64 sous-images figure en abscisse. La répartition des allumages successifs d'une même diode électroluminescente au cours d'une séquence de 64 sous-images figure donc sur une ligne du tableau représenté par la figure 3.

Cependant, on a remarqué que, pour des questions de persistance rétinienne, le nombre minimum d'allumages devait se faire de préférence au rythme de 50 fois par seconde, environ. Le tableau de la figure 3 montre que cette condition est satisfaite puisque, pour le premier niveau d'éclairement, on prévoit deux allumages aux sous-images 1 et 33. On évite ainsi tout scintillement. Pour les autres configurations d'allumage, on remarque que les instant d'allumage sont autant que faire se peut, régulièrement répartis dans le temps.

Les informations lues dans la table de conversion T sont transmises en série à la sortie S vers la cascade de registres à décalage 13. La sortie de chaque étage d'un registre pilote une bascule 12 qui alimente elle-même une diode électroluminescente 13. Lorsque toutes les informations représentatives d'une sous-image ont été transmises à la cascade de registres à décalage 13, un ordre de chargement des bascules 12 est transmis à toutes ces bascules, via le conducteur 15. Les bascules chargent les informations contenues momentanément dans tous les registres à décalage. Les diodes électroluminescentes restent allumées ou éteintes selon les valeurs stockées dans les bascules pendant tout le temps d'affichage d'une sous-image. Pendant ce temps, les registres à décalage reçoivent les informations de la sous-image suivante. Lorsque 64 sous-images ont ainsi été affichées en un 25ème de seconde, le contenu de la mémoire M3 est modifié et le système élabore à nouveau un cycle de 64 sous-images.

## Revendications

1. Système de visualisation d'images comprenant au moins un panneau de composants lumineux tels que des diodes électroluminescentes, agencés suivant une configuration matricielle sur une surface de visualisation, lesdites diodes étant pilotées par des sorties respectives de registres à décalage connectés en cascade, caractérisé en ce qu'il comprend :

- une mémoire (M3) recevant des informations numérisées représentatives d'au moins une fraction d'image vidéo et correspondant à un nombre prédéterminé de composants lumineux, le contenu de ladite mémoire étant renouvelé à un rythme de succession desdites images,

- une table de conversion (T) formant mémoire morte, connectée d'une part à ladite mémoire (M3) et, d'autre part, à un séquenceur (H) pour recevoir respectivement cycliquement des informations de ladite mémoire et des ordres de séquencement, la sortie de cette table de conversion étant connectée à ladite cascade de registres à décalage, et

- en ce que ladite table de conversion est programmée pour générer à sa sortie, des informations représentatives de sous-images, au rythme dudit séquenceur, chaque composant lumineux étant allumé au cours d'un cycle de sous-images un nombre de fois et à des instants prédéterminés, au moins en partie, par la valeur d'une information correspondante dans ladite mémoire.

2. Système de visualisation selon la revendication 1, caractérisé en ce que ladite table de conversion (T) est en outre connectée à des moyens sensibles à la luminosité ambiante, comportant par exemple un transducteur photosensible (16) et un convertisseur analogique-numérique (17), aptes à élaborer des informations numérisées représentatives de ladite luminosité ambiante, pour modifier les configurations d'allumage dans lesdites sous-images en fonction de cette luminosité ambiante.

3. Système de visualisation selon la revendication 2, caractérisé en ce que ledit séquenceur (H) émet des signaux cycliques pour l'élaboration de 64 sous-images pendant le temps d'un cycle de renouvellement desdites informations dans ladite mémoire.

4. Système de visualisation selon la revendication 2 ou 3, caractérisé en ce que lesdites informations de ladite mémoire (M3) sont codées pour pouvoir prendre huit valeurs différentes.

5. Système de visualisation selon l'une des revendications 2 à 4, caractérisé en ce que lesdites informations représentatives de la luminosité ambiante sont codées pour pouvoir prendre quatre valeurs différentes.

FIG. 1

| | 0 | 1 | 2 | 3 | 4 | 5 | 6 | 7 |
|---|---|---|---|---|---|---|---|---|
| 0 | 0 | 2 | 4 | 10 | 18 | 30 | 40 | 60 |
| 1 | 0 | 2 | 6 | 12 | 20 | 32 | 44 | 64 |
| 2 | 0 | 2 | 8 | 16 | 28 | 38 | 44 | 64 |
| 3 | 0 | 3 | 8 | 18 | 30 | 40 | 60 | 64 |

FIG. 2

FIG. 3